# EUROPEAN PATENT APPLICATION

(11) **EP 4 730 136 A1**
(43) Date of publication of application: **22.04.2026**
(21) Application number: 25209295.2
(22) Date of filing: 16.10.2025
(51) Int. Cl.: G06F 11/30

(54) **DYNAMIC DATA COLLECTION SYSTEM**

(30) Priority: 16.10.2024 US 202463708048 P; 15.10.2025 US 202519358636
(71) Applicant: Vertiv Corporation, Westerville, OH 43082 (US)
(72) Inventor: VOIGT, Tyler William, Westerville, 43082 (US); Takacs, Balint, Westerville, 43082 (US)
(74) Representative: Cousens, Nico

(57) **Abstract**

A system for dynamically adjusting data collection within a physical computing environment is disclosed. The system includes computing devices receiving a first set of data from a plurality of devices, where at least a portion of the first set of data is collected by one or more devices according to a first data collection definition, where the first set of data provides information related to a monitored condition of the physical computing environment; determine, based on the first set of data, a second data collection definition, the second data collection definition defining data collection settings that enable collection of a second set of data that provides the information, where the second set of data is smaller in volume compared to the first set of data; and instructing the one or more devices to collect data according to the second data collection definition.

## Description

### CROSS REFERENCE TO RELATED APPLICATIONS

This U.S. Non-Provisional Patent Applications claims the benefit of and priority to U.S. Provisional Patent Application Serial No. 63/708,048 filed October 16, 2024.

### TECHNICAL FIELD

The present disclosure relates to data collection in data centers and other computing environments.

### BACKGROUND

In today's technology-driven world, data is crucial for optimizing performance and maintaining the efficiency of various systems, especially in data centers and various computing environments. Data may be collected at the highest resolution available from multiple sources within a computing environment. While this can provide valuable insights, it also leads to an overabundance of data, which becomes challenging to manage, analyze, and interpret. High-resolution data collection can consume significant resources, including bandwidth, storage and computational power, making it time-consuming and costly to derive actionable insights from the collected data.

A solution is needed for allowing systems to dynamically adjust data gathering methods and reduce the amount of data collected while still maintaining meaningful and accurate results.

### SUMMARY

This disclosure relates generally to a supervisory system for dynamically adjusting data collection within a physical computing environment.

An aspect of the disclosed embodiments includes a system for dynamically adjusting data collection within a physical computing environment. The system comprises one or more computing devices configured to receive a first set of data from a plurality of devices, where at least a portion of the first set of data is collected by one or more devices of the plurality of devices according to a first data collection definition of a plurality of data collection definitions, where the first set of data provides information related to a monitored condition of the physical computing environment. The one or more computing devices are further configured to determine, based on the first set of data, a second data collection definition from the plurality of data collection definitions, the second data collection definition defining data collection settings that enable collection of a second set of data that provides the information, where the second set of data is smaller in volume compared to the first set of data, and instruct the one or more devices to collect data according to the second data collection definition.

Another aspect of the disclosed embodiments includes a system for dynamically adjusting data collection within a physical computing environment. The system includes: a computing device configured to: receive a first set of data from a plurality of devices, wherein at least a portion of the first set of data is collected by one or more devices of the plurality of devices according to a first data collection definition of a plurality of data collection definitions, and wherein the first set of data provides information related to a monitored condition of the physical computing environment; determine, based on the first set of data, a second data collection definition from the plurality of data collection definitions, the second data collection definition defining data collection settings that enable collection of a second set of data that provides the information related to the monitored condition of the physical computing environment; and instruct the one or more devices to collect data according to the second data collection definition.

Another aspect of the disclosed embodiments includes a method for dynamically adjusting data collection within a physical computing environment. The method includes: receiving a first set of data from a plurality of devices, wherein at least a portion of the first set of data is collected by one or more devices of the plurality of devices according to a first data collection definition of a plurality of data collection definitions, and wherein the first set of data provides information related to a monitored condition of the physical computing environment; determining, based on the first set of data, a second data collection definition from the plurality of data collection definitions, the second data collection definition defining data collection settings that enable collection of a second set of data that provides the information related to the monitored condition of the physical computing environment; and instructing the one or more devices to collect data according to the second data collection definition.

These and other aspects of the present disclosure are disclosed in the following detailed description of the embodiments, the appended claims, and the accompanying figures.

### BRIEF DESCRIPTION OF THE DRAWINGS

The disclosure is best understood from the following detailed description when read in conjunction with the accompanying drawings. It is emphasized that, according to common practice, the various features of the drawings are not to scale. On the contrary, the dimensions of the various features are arbitrarily expanded or reduced for clarity.
FIG. 1 illustrates an exemplary layout of a physical computing environment including a supervisory system for dynamically adjusting data collection within the physical computing environment, according to the principles of the present disclosure.
FIG. 2 illustrates an exemplary embodiment of an artificial intelligence engine, according to the principles of the present disclosure.
FIG. 3 depicts a flowchart of a method for dynamically adjusting data collection within a physical computing environment, according to the principles of the present disclosure.
FIG. 4 depicts a flowchart of a method for determining relationship information between environmental changes in the physical computing environment monitored by one or more sensors and operational behavior of an environmental control unit, according to the principles of the present disclosure.
FIG. 5 is a block diagram of an example computing device that may be used to implement embodiments, according to the principles of the present disclosure.

Those skilled in the art will appreciate and understand that, according to common practice, various features of the drawings discussed below are not necessarily drawn to scale, and that dimensions of various features and elements of the drawings may be expanded or reduced to more clearly illustrate the embodiments of the present disclosure described herein.

### DETAILED DESCRIPTION

The following discussion is directed to various embodiments of the disclosure. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

The present specification and accompanying drawings disclose one or more embodiments that incorporate the features of the present disclosure. The scope of the present disclosure is not limited to the disclosed embodiments. The disclosed embodiments merely exemplify the present disclosure, and modified versions of the disclosed embodiments are also encompassed by the present disclosure. Embodiments of the present disclosure are defined by the claims appended hereto.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially," "approximately," and "about" modifying a condition or relationship characteristic of a feature or features of an embodiment of the disclosure, are understood to mean that the condition or characteristic is defined to be within tolerances that are acceptable for operation of the embodiment for an application for which it is intended.

Furthermore, it should be understood that spatial descriptions (e.g., "above," "below," "up," "left," "right," "down," "top," "bottom," "vertical," "horizontal," etc.) used herein are for purposes of illustration only, and that practical implementations of the structures described herein can be spatially arranged in any orientation or manner.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Numerous exemplary embodiments are described as follows. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

In today's technology-driven world, data is crucial for optimizing performance and maintaining the efficiency of various systems, especially in data centers and various computing environments. Data may be collected at the highest resolution available from multiple sources within a computing environment. While this can provide valuable insights, it also leads to an overabundance of data, which becomes challenging to manage, analyze, and interpret. High-resolution data collection can consume significant resources, including bandwidth, storage and computational power, making it time-consuming and costly to derive actionable insights from the collected data.

A solution is needed for allowing systems to dynamically adjust data gathering methods and reduce the amount of data collected while still maintaining meaningful and accurate results.

Embodiments disclosed herein are directed to a system for dynamically adjusting data collection within a physical computing environment. For example, the system may comprise one or more computing devices configured to receive a first set of data from a plurality of devices, where at least a portion of the first set of data is collected by one or more devices of the plurality of devices according to a first data collection definition of a plurality of data collection definitions, where the first set of data provides information related to a monitored condition of the physical computing environment. The one or more computing devices may be further configured to determine, based on the first set of data, a second data collection definition from the plurality of data collection definitions, the second data collection definition defining data collection settings that enable collection of a second set of data that provides the information, where the second set of data is smaller in volume compared to the first set of data, and instruct the one or more devices to collect data according to the second data collection definition.

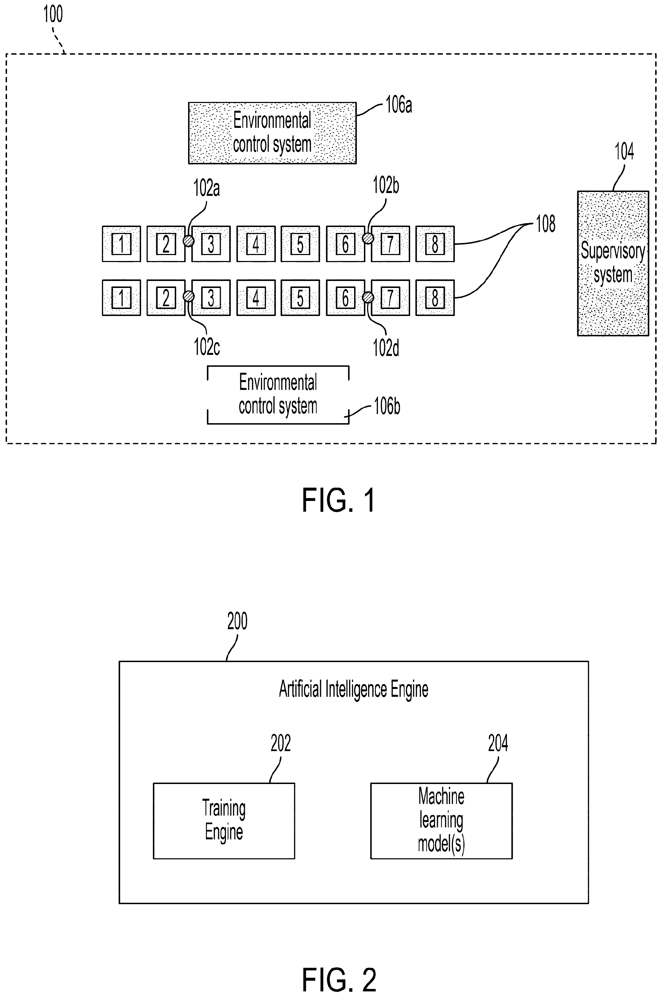

To help further illustrate the foregoing, FIG. 1 illustrates an exemplary layout of a physical computing environment 100 including a supervisory system 104 for dynamically adjusting data collection within the physical computing environment 100. As depicted in FIG. 1, the physical computing environment 100 includes the supervisory system 104, environmental control systems 106a and 106b, sensors 102a, 102b, 102c, and 102d, and rows of server racks 108. As further depicted in FIG. 1, the sensors 102a, 102b, 102c, and 102d are positioned throughout the physical computing environment 100 among the rows of server racks 108. Although the physical computing environment 100 is depicted as such in FIG. 1, it should be understood that the components within the physical computing environment 100 may include any number or combination of components beyond those specifically shown.

The environmental control systems 106a and 106b may be configured to manage environmental conditions of the physical computing environment 100, including temperature, humidity, and airflow, to ensure optimal operating conditions for servers and other equipment on the rows of server racks 108. In some embodiments, the environmental control systems 106a and 106b may include cooling units. In some embodiments, the environmental control systems 106a and 106b may comprise ventilation systems or dehumidifiers.

The sensors 102a, 102b, 102c, and 102d may be configured to monitor environmental conditions (e.g., temperature, humidity, pressure, and airflow) within the physical computing environment 100. More specifically, the sensors 102a, 102b, 102c, and 102d may measure environmental parameters and continuously relay measurement data to the supervisory system 104. For example, temperature sensors may detect heat levels near critical equipment (e.g., equipment on the rows of server racks 108) to prevent overheating, while humidity sensors may monitor moisture levels to avoid condensation that could damage electronic components. As another example, airflow sensors may ensure that ventilation systems are properly circulating air, and pressure sensors may track changes in cooling system performance to maintain efficient cooling operations.

The supervisory system 104 may be configured to communicate with a plurality of devices in the physical computing environment 100, including the environmental control systems 106a and 106b and the sensors 102a, 102b, 102c, and 102d. The communication between the supervisory system 104 and these devices allows for continuous monitoring and control of environmental conditions within the physical computing environment 100. For example, the sensors 102a, 102b, 102c, and 102d may provide data regarding environmental parameters, such as temperature, humidity, and airflow, to the supervisory system 104. The supervisory system 104 may be configured to adjust the environmental control systems 106a and 106b based on data from the sensors 102a, 102b, 102c, and 102d. There adjustments may include regulating cooling, modifying airflow, or altering other environmental factors to maintain optimal operating conditions for equipment within the physical computing environment 100. For example, the supervisory system 104 may send control signals to the environmental control systems 106a and 106b indicating such adjustments to ensure responsive environmental management.

The supervisory system 104 may be further configured to oversee the collection and management of data from a plurality of devices in the physical computing environment 100. For example, the supervisory system 104 may receive a first set of data from the sensors 102a, 102b, 102c, and 102d and the environmental control systems 106a and 106b, which collect information based on a first data collection definition, where the information is related to a monitored condition of the physical computing environment. For example, the sensors 102a, 102b, 102c, and 102d and the environmental control systems 106a and 106b may collect data according to predefined intervals or event-based triggers. The first set of data may then be transmitted to the supervisory system 104. To help further illustrate, assume the sensors 102a, 102b, 102c, and 102d and the environmental control systems 106a and 106b collect temperature or airflow data at a high frequency during peak operating hours. Rapid fluctuations in temperature might indicate potential overheating of electronic components in the physical computing environment 100. In such scenarios, the sensors 102a, 102b, 102c, and 102d and the environmental control systems 106a and 106b may be set to collect data at a fixed interval (e.g., every second) to provide insights into environmental conditions, and high-frequency data may need to be collected to capture critical, time-sensitive information.

Based on the first set of data, the supervisory system 104 may determine a second data collection definition from a plurality of data collection definitions for one or more devices within the physical computing environment 100 (e.g., the sensors 102a, 102b, 102c, and 102d and the environmental control systems 106a and 106b). The second data collection definition may define data collection settings that enable collection of a second set of data that provides the same information as the first set of data, where the second set of data is smaller in volume compared to the first set of data, allowing for more resource-efficient monitoring.

In some embodiments, the supervisory system 104 (e.g., after receiving high-frequency data in the scenario described above) may process the collected data to approximate the data points through various techniques. In some embodiments, one approach may involve the use of numerical optimization methods, where the supervisory system 104 identifies key data patterns and minimizes the number of points needed to represent the overall trend of the data accurately. For example, the supervisory system 104 can employ curve fitting algorithms or least squares optimization to approximate the collected data (such as approximating the relationship between temperature and time), allowing for the number of data points to be reduced while preserving the integrity of any trends in the data.

In some embodiments, another approach may leverage techniques related to genetic algorithms, where different data collection definitions are treated as a population of potential solutions. Through the process of selection, crossover, and mutation, the supervisory system 104 may test multiple configurations of data collection settings (e.g., different polling intervals or thresholds). The supervisory system 104 can evaluate each configuration by simulating how well it approximates the original data set (e.g., the high frequency data) with fewer points while maintaining accuracy. Over several iterations, the most effective data collection definition is "evolved."

A plurality of data collection definitions may be utilized to balance data accuracy and resource efficiency. A standard fixed polling data collection definition involves collecting data at regular, predefined intervals, depending on the device protocol or settings. For example, for thermal equipment, data is typically collected around two, five, ten, thirty, or sixty seconds. For battery powered monitoring devices, data may be collected at longer intervals, and for control applications in a multi-device environment, data may be collected every thirty to forty seconds. This data collection definition allows the supervisory system 104 to maintain regular monitoring and make any necessary adjustments to the environmental control systems 106a and 106b.

A change of value data collection definition, on the other hand, triggers data collection only when a monitored variable undergoes a significant change. For example, the sensor 102a may detect a significant spike in temperature near server rack 1. This change could cause a broadcast message (e.g., including event data, value data, and metadata associated with the detected event) to be sent to the supervisory system 104, which would then assess the changes. This data collection definition may reduce unnecessary data collection by only activating when environmental shifts occur.

Absolute difference or percentage difference data collection definitions involve comparing a current value against a previous value and triggering data collection if the difference exceeds a predefined threshold, either in absolute terms or as a percentage. For example, in the physical computing environment 100, if the temperature around the server rack 1, monitored by the sensor 102a, rises by five degrees compared to the last recorded value, the supervisory system 104 may register this as an absolute difference exceeding a predefined threshold. These data collection definitions allow for fine-tuning and ensure that only significant deviations from normal conditions result in data collection.

Max polling frequency can be set as a safeguard to ensure that even if no triggering events occur, data is collected at maximum intervals. For example, if none of the sensors 102a, 102b, 102c, and 102d detect any notable changes in temperature or airflow, the supervisory system 104 will still perform a data collection check after a certain time threshold (e.g., every thirty to forty seconds). This ensures that even in cases where environmental changes are subtle or gradual, the supervisory system 104 continues to receive data at regular intervals.

The supervisory system 104 may generate an instruction specifying the other data collection definition defining updated data collection settings and transmits the instruction to the relevant devices (e.g., the sensors 102a, 102b, 102c, and 102d and the environmental control systems 106a and 106b) in the physical computing environment 100. This process results in adjustments to the data collection parameters at the relevant devices, dynamically optimizing data collection to suit conditions and operational needs. By employing multiple data collection definitions and dynamically switching between the data collection definitions, the supervisory system 104 can reduce unnecessary data collection while ensuring continued monitoring of critical conditions.

To help further illustrate, in the physical computing environment 100, assume the sensors 102a, 102b, 102c, and 102d are monitoring environmental conditions such as temperature near the rows of server racks 108. The supervisory system 104 may initially set the data collection to a first data collection definition, which is a standard fixed polling. In this scenario, the supervisory system 104 collects data from the sensors 102a, 102b, 102c, and 102d at five-second intervals as part of routine monitoring during peak operation hours. Data is continued to be collected at a high frequency to capture any rapid changes in temperature that might indicate potential issues with the physical computing environment 100. After a period of monitoring, the supervisory system 104 may detect that temperature has stabilized. Given the stable conditions, the supervisory system 104 determines that the high-frequency data collection is no longer necessary. The supervisory system 104 may use a numerical optimization technique to approximate the data gathered from the high-frequency polling. By using a curve-fitting algorithm or similar regression analysis, the supervisory system 104 approximates the data with fewer data points while ensuring the key temperature trend is still accurately represented. For example, instead of continuously collecting data every five seconds, the supervisory system 104 may calculate that the temperature has remained stable enough that only a few representative data points are needed to capture the trend of the temperature data over a ten-minute time interval.

Based on this analysis, the supervisory system 104 may determine that a second data collection definition, the absolute difference data collection, is more efficient and less of a strain on system resources. For example, in this data collection definition, data may only be collected when there is a temperature change of more than a threshold amount (e.g., more than 2 °F) determined based on the high-frequency temperature data collected. This reduces the amount of redundant data collected during stable periods. The supervisory system 104 can now conserve sensor power and minimize network traffic without sacrificing accuracy.

In some embodiments, the supervisory system 104 may be configured to determine, based on collected data, relationship information between environmental changes in the physical computing environment monitored by one or more sensors of the plurality of devices (e.g., the sensors 102a, 102b, 102c, and 102d) and operational behavior of an environmental control unit (e.g., the environmental control systems 106a and 106b). Further, the supervisory system 104 may be configured to determine, based on the relationship information, adjustments to data collection settings of the environmental control unit. To help illustrate, if the sensors 102a, 102b, 102c, and 102d, which monitor temperature, detect a sudden increase in temperature, the supervisory system 104 could correlate this change with the current operation of the environmental control systems 106a and 106b, such as a reduced airflow from a cooling unit or a malfunctioning air conditioner. In this example, based on the relationship between the rising temperature (detected by the sensors) and the operational behavior (e.g., fan speed adjustments, cooling fluid flow rate, compressor activity, temperature set points, airflow direction or volume, power consumption levels, HVAC system modes, etc.,) of the cooling units, the supervisory system 104 may adjust the data collection settings of a data collection definition, such as switching to a high-frequency polling method for the sensors to enable the temperature to be closely monitored until the cooling issue is resolved and provide the adjustments to the sensors that detected the temperature change.

Additionally, in some embodiments, the supervisory system 104 may be configured to determine, based on the relationship information, a triggering change in environmental conditions, where the triggering change in environmental conditions is defined by environmental conditions exceeding a predefined threshold or exhibiting a rapid rate of change. The supervisory system 104 may be further configured to detect, based on data received, the triggering change in environmental conditions and provide, in response to detecting the triggering change in environmental conditions, adjustments to data collection settings of the environmental control unit to the environmental control unit. For example, the supervisory system 104 may classify a sudden or rapid increase in temperature near the rows of server racks 108, surpassing a predefined threshold within a given period of time, as a triggering event. This rapid temperature rise could be due to a malfunction in the environmental control systems 106a and 106b. In response, the supervisory system 104 may modify the data collection definition, increasing the polling frequency to closely monitor the ongoing temperature changes until the environmental condition stabilizes.

In some embodiments, the supervisory system 104 may be configured to determine, based on a subset of data of the received data, a data collection definition from the plurality of data collection definitions, where the data collection definition defines data collection settings that enable the subset of data to be approximated with fewer data points while maintaining accuracy of the subset of data and where the subset of data is data collected from one or more devices operating in a specific mode of operation in the physical computing environment 100. The supervisory system 104 may monitor sensors that are operating in a specific mode of operation (e.g., low-power mode) within the physical computing environment 100. For example, if one or more sensors are operating in a low-power mode, the supervisory system 104 could approximate the subset of data collected from the one or more sensors operating in low-power mode and determine, based on the subset of data, an optimized data collection definition, such as a change of value data collection definition, where data is only sent if there is a significant change in the monitored environmental variables.

In some embodiments, the supervisory system 104 may determine, based on a subset of data of the data, a data collection definition from the plurality of data collection definitions, where the data collection definition defines data collection settings that enable the subset of data to be approximated with fewer data points while maintaining accuracy of the subset of data and where the subset of data is of a specific data type of a plurality of data types that are collected and processed in the physical computing environment 100. The plurality of data types may comprise environmental data, device operational data, and system-level performance and usage data. As such, a data collection definition may be determined based on the data type. For example, environmental data may change gradually over time. To optimize data collection for this type of data, a change of value data collection definition may be implemented, where data is only collected when the temperature or humidity exceeds a threshold. As another example, device operation data (e.g., fan speeds, power usage, etc.,) may need to be collected more frequently, particularly during peak performance or under high load conditions. When the supervisory system 104 detects lower loads, the data collection frequency may be decreased. As another example, system level performance data (e.g., CPU usage, network traffic, etc.) can be highly dynamic, especially during periods of high activity or congestion. The data collection definition may need to be optimized using a fixed polling interval with higher granularity during expected peak times and lower frequency during off-peak hours.

In some embodiments, an artificial intelligence engine may be used to identify trends and/or patterns in collected data and determine, based on the collected data, an optimal data collection definition. For example, in FIG. 2, an artificial intelligence engine 200 may include one or more machine learning models 204 that are trained using the collected data. Artificial intelligence engine 200 may include a training engine 202 capable of generating one or more machine learning models 204. The machine learning models 204 may be trained to determine a data collection definition based on data collected from devices within the physical computing environment 100. The one or more machine learning models 204 may be generated by the training engine 202 and may be implemented in computer instructions executable by one or more processing devices of the training engine 202.

To generate the one or more machine learning models 204, the training engine 202 may train the one or more machine learning models 204. For example, the training engine 202 may use data collected at a high frequency from a plurality of devices of the physical computing environment. The results may include information indicating an optimal data collection definition and associated data collection settings.

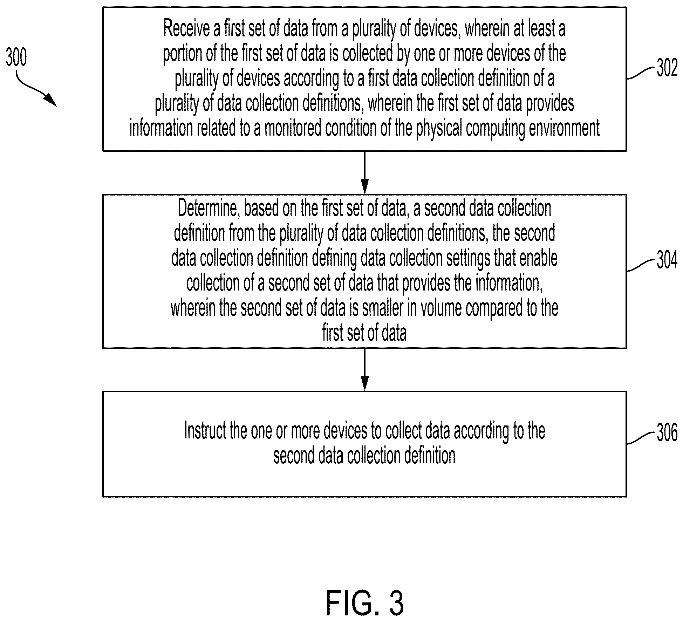

FIG. 3 depicts a flowchart 300 of a method for dynamically adjusting data collection within a physical computing environment, according to an example embodiment. As shown in FIG. 3, the method of flowchart 300 begins at step 302. In step 302, a first set of data from a plurality of devices is received, where at least a portion of the first set of data is collected by one or more devices of the plurality of devices according to a first data collection definition of a plurality of data collection definitions, where the first set of data provides information related to a monitored condition of the physical computing environment.

At step 304 in flowchart 300, based on the first set of data, a second data collection definition from the plurality of data collection definitions is determined, the second data collection definition defining data collection settings that enable collection of a second set of data that provides the information, wherein the second set of data is smaller in volume compared to the first set of data.

At step 306 in flowchart 300, the one or more devices is instructed to collect data according to the second data collection definition.

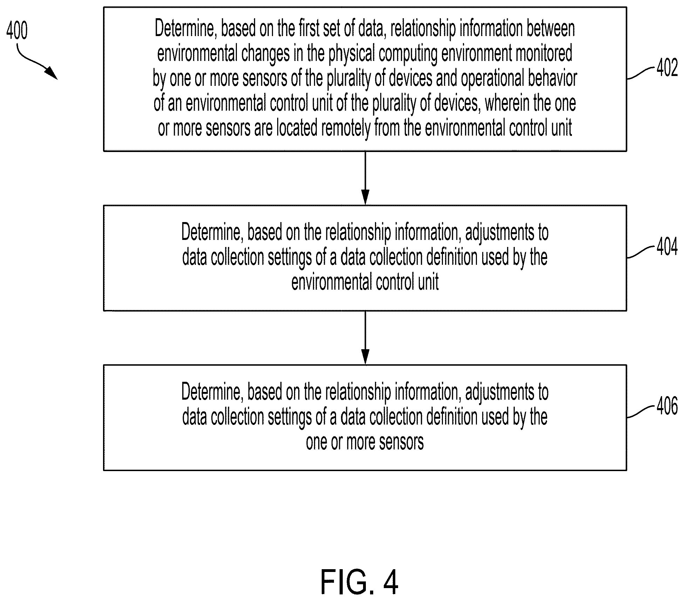

FIG. 4 depicts a flowchart 400 of a method for determining relationship information between environmental changes in the physical computing environment and operational behavior of an environmental control unit, according to an example embodiment. As shown in FIG. 4, the method of flowchart 400 begins at step 402. In step 402, based on the first set of data, relationship information between environmental changes in the physical computing environment monitored by one or more sensors of the plurality of devices and operational behavior of an environmental control unit of the plurality of devices is determined, where the one or more sensors are located remotely from the environmental control unit.

At step 404 in flowchart 400, based on the relationship information, adjustments to data collection settings of the environmental control unit are determined.

At step 406 in flowchart 400 based on the relationship information, adjustments to data collection settings of a data collection definition used by the one or more sensors is determined.

In some embodiments, the first set of data is of a specific data type of a plurality of data types that are collected in the physical computing environment and the plurality of data types comprises environmental data, device operational data, and system-level performance and usage data. In some embodiments, the first data set is data collected from one or more devices operating in a specific mode of operation

In some embodiments, each data collection definition of the plurality of data collection definitions involves one or more of: collecting data at predefined intervals, triggering data collection events when environmental conditions exceed a predefined threshold or exhibit a rapid rate of change; and adjusting data collection frequency in response to relationship information between environmental data and an operational state of one or more devices of the plurality of devices.

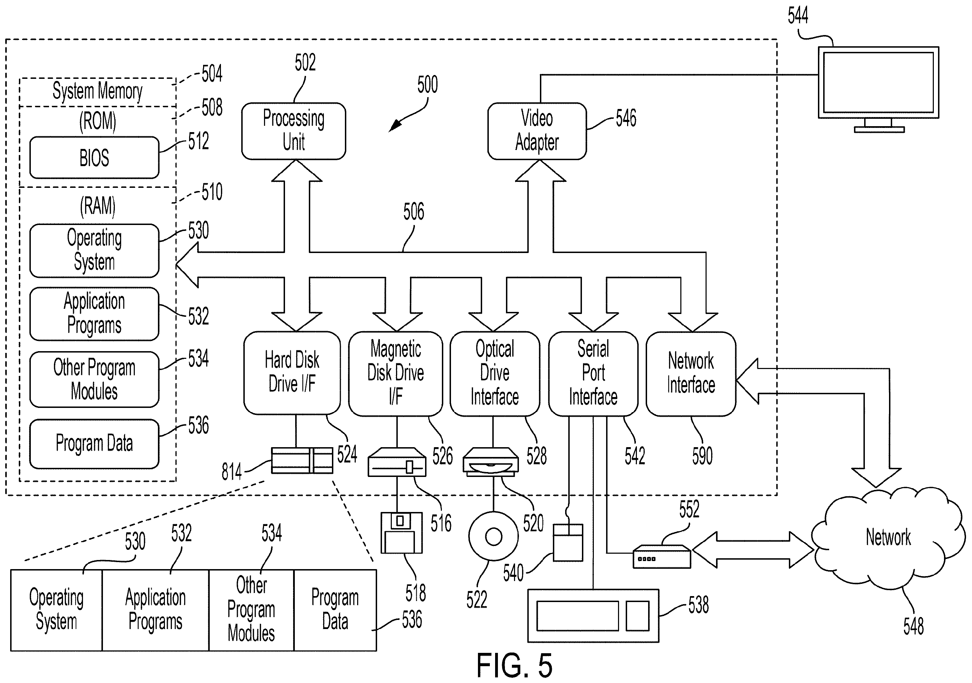

FIG. 5 depicts an example processor-based computer system 500 that may be used to implement various embodiments described herein, such as any of the embodiments described in the above and in reference to FIGS. 1-4. For example, processor-based computer system 500 may be used to implement any of the components of the liquid cooling system as described above in reference to FIGS. 1-4. The description of processor-based computer system 500 provided herein is provided for purposes of illustration and is not intended to be limiting. Embodiments may be implemented in further types of computer systems, as would be known to persons skilled in the relevant art(s).

As shown in FIG. 5, processor-based computer system 500 includes one or more processors, referred to as processor circuit 502, a system memory 504, and a bus 506 that couples various system components including system memory 504 to processor circuit 502. Processor circuit 502 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 502 may execute program code stored in a computer readable medium, such as program code of operating system 530, application programs 532, other programs 534, etc. Bus 506 represents one or more of any of several types of bus structures, including a memory bus or memory controller, a peripheral bus, an accelerated graphics port, and a processor or local bus using any of a variety of bus architectures. System memory 504 includes read only memory (ROM) 508 and random access memory (RAM) 510. A basic input/output system 512 (BIOS) is stored in ROM 508.

Processor-based computer system 800 also has one or more of the following drives: a hard disk drive 514 for reading from and writing to a hard disk, a magnetic disk drive 516 for reading from or writing to a removable magnetic disk 518, and an optical disk drive 520 for reading from or writing to a removable optical disk 522 such as a CD ROM, DVD ROM, or other optical media. Hard disk drive 514, magnetic disk drive 516, and optical disk drive 520 are connected to bus 506 by a hard disk drive interface 524, a magnetic disk drive interface 526, and an optical drive interface 528, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 530, one or more application programs 532, other programs 534, and program data 536. Application programs 532 or other programs 534 may include, for example, computer program logic (e.g., computer program code or instructions) for implementing the systems described above, including the embodiments described in reference to FIGS. 1-4.

A user may enter commands and information into processor-based computer system 500 through input devices such as keyboard 538 and pointing device 540. Other input devices (not shown) may include a microphone, joystick, game pad, satellite dish, scanner, a touch screen and/or touch pad, a voice recognition system to receive voice input, a gesture recognition system to receive gesture input, or the like. These and other input devices are often connected to processor circuit 502 through a serial port interface 542 that is coupled to bus 506, but may be connected by other interfaces, such as a parallel port, game port, or a universal serial bus (USB).

A display screen 544 is also connected to bus 506 via an interface, such as a video adapter 546. Display screen 544 may be external to, or incorporated in processor-based computer system 500. Display screen 544 may display information, as well as being a user interface for receiving user commands and/or other information (e.g., by touch, finger gestures, virtual keyboard, etc.). In addition to display screen 544, processor-based computer system 500 may include other peripheral output devices (not shown) such as speakers and printers.

Processor-based computer system 500 is connected to a network 548 (e.g., the Internet) through an adaptor or network interface 550, a modem 552, or other means for establishing communications over the network. Modem 552, which may be internal or external, may be connected to bus 506 via serial port interface 542, as shown in FIG.5, or may be connected to bus 506 using another interface type, including a parallel interface.

As used herein, the terms "computer program medium," "computer-readable medium," and "computer-readable storage medium" are used to generally refer to physical hardware media such as the hard disk associated with hard disk drive 514, removable magnetic disk 518, removable optical disk 522, other physical hardware media such as RAMs, ROMs, flash memory cards, digital video disks, zip disks, MEMs, nanotechnology-based storage devices, and further types of physical/tangible hardware storage media (including system memory 504 of FIG. 5). Such computer-readable storage media are distinguished from and non-overlapping with communication media (do not include communication media). Communication media typically embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Embodiments are also directed to such communication media.

As noted above, computer programs and modules (including application programs 532 and other programs 534) may be stored on the hard disk, magnetic disk, optical disk, ROM, RAM, or other hardware storage medium. Such computer programs may also be received via network interface 550, serial port interface 542, or any other interface type. Such computer programs, when executed or loaded by an application, enable processor-based computer system 500 to implement features of embodiments discussed herein. Accordingly, such computer programs represent controllers of processor-based computer system 500.

Implementations of the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present disclosure and do not limit the present disclosure. On the contrary, the disclosure is intended to cover various modifications and arrangements included within the scope of the appended claims, which scope is to be accorded the broadest interpretation to encompass all such modifications and structure as is permitted under the law.

## Claims

1. A system for dynamically adjusting data collection within a physical computing environment, the system comprising:
a computing device configured to:
receive a first set of data from a plurality of devices, wherein at least a portion of the first set of data is collected by one or more devices of the plurality of devices according to a first data collection definition of a plurality of data collection definitions, and wherein the first set of data provides information related to a monitored condition of the physical computing environment;
determine, based on the first set of data, a second data collection definition from the plurality of data collection definitions, the second data collection definition defining data collection settings that enable collection of a second set of data that provides the information related to the monitored condition of the physical computing environment; and
instruct the one or more devices to collect data according to the second data collection definition.

2. The system of claim 1, wherein the computing device is further configured to:
determine, based on the first set of data, adjustments to data collection settings of the first data collection definition; and
instruct the one or more devices to collect data according to the adjustments to the data collection settings of the first data collection definition.

3. The system of claim 2, wherein the adjustments to the data collection settings of the first data collection definition enable collection of a third set of data that provides the information related to the monitored condition of the physical computing environment, and optionally
wherein the third set of data is smaller in volume compared to the first set of data.

4. The system of any preceding claim, wherein the second set of data is smaller in volume compared to the first set of data.

5. The system of any preceding claim, wherein the computing device is further configured to determine, based on the first set of data, relationship information between environmental changes in the physical computing environment monitored by one or more sensors of the plurality of devices and operational behavior of an environmental control unit of the plurality of devices, and/or
wherein the one or more sensors are located remotely from the environmental control unit.

6. The system of claim 5, wherein the computing device is further configured to determine, based on the relationship information, adjustments to data collection settings of a data collection definition used by the environmental control unit.

7. The system of claim 5 or 6, wherein the computing device is further configured to determine, based on the relationship information, adjustments to data collection settings of a data collection definition used by the one or more sensors.

8. The system of any preceding claim, wherein the first set of data is of a specific data type of a plurality of data types that are collected in the physical computing environment, and optionally
wherein the plurality of data types include an environmental data type, a device operational data type, and a system-level performance and usage data type.

9. The system of any preceding claim, wherein the first data set is data collected from one or more devices operating in a specific mode of operation.

10. The system of any preceding claim, wherein each data collection definition of the plurality of data collection definitions define one or more of: collecting data at predefined intervals, triggering data collection events when environmental conditions exceed a predefined threshold or exhibit a rapid rate of change; and adjusting data collection frequency in response to relationship information between environmental data and an operational state of one or more devices of the plurality of devices.

11. A method for dynamically adjusting data collection within a physical computing environment, the method comprising:
receiving a first set of data from a plurality of devices, wherein at least a portion of the first set of data is collected by one or more devices of the plurality of devices according to a first data collection definition of a plurality of data collection definitions, and wherein the first set of data provides information related to a monitored condition of the physical computing environment;
determining, based on the first set of data, a second data collection definition from the plurality of data collection definitions, the second data collection definition defining data collection settings that enable collection of a second set of data that provides the information related to the monitored condition of the physical computing environment; and
instructing the one or more devices to collect data according to the second data collection definition.

12. The method of claim 11, further comprising determining, based on the first set of data, adjustments to data collection settings of the first data collection definition.

13. The method of claim 12, wherein the adjustments to the data collection settings of the first data collection definition enable collection of a third set of data that provides the information related to the monitored condition of the physical computing environment.

14. The method of claim 13, further comprising instructing the one or more devices to collect data according to the adjustments to the data collection settings of the first data collection definition, and/or
wherein the third set of data is smaller in volume compared to the first set of data.

15. The method of claims 11 to 14, wherein the second set of data is smaller in volume compared to the first set of data, and/or
wherein further comprising determining, based on the first set of data, relationship information between environmental changes in the physical computing environment monitored by one or more sensors of the plurality of devices and operational behavior of an environmental control unit of the plurality of devices.
